# EUROPEAN PATENT SPECIFICATION

(11) **EP 3 490 838 B1**
(45) Date of publication and mention of the grant of the patent: **08.09.2021**
(21) Application number: 17834940.3
(22) Date of filing: 07.07.2017
(51) Int. Cl.: B60N 2/22, B60N 2/02, B60N 2/04, B60N 2/06, B60N 2/10, B60N 2/12, B60N 2/20, B60N 2/07, B60N 2/08, B60N 2/68

(54) **A SEAT SYSTEM**
SITZSYSTEM
SYSTÈME DE SIÈGE

(30) Priority: 28.07.2016 US 201662367903 P
(43) Date of publication of application: 05.06.2019
(73) Proprietor: Adient Luxembourg Holding S.à r.l., 1855 Luxembourg (LU)
(72) Inventor: KAPUSKY, Michael, South Lyon, Michigan 48178 (US); MICHALAK, Eric, Canton, Michigan 48187 (US); CARUSS, Nathan, Ann Arbor, Michigan 48103 (US); CARLSON, Jennifer, Ypsilanti, Michigan 48197 (US); BURTON, Brent, Windsor, Ontario N8P-1R9 (CA); MCCLELLAND, Matthew, Trenton, Michigan 48183 (US)
(74) Representative: Liedhegener, Ralf
(86) International application number: PCT/US2017/041105
(87) International publication number: WO 2018/022275

(56) References cited:
- DE-A1-102005 023 936
- JP-A- H08 238 144
- US-A- 2 725 921
- US-A- 5 425 522
- US-A1- 2008 100 112
- US-B2- 6 926 364
- US-B2- 7 229 118
- US-B2- 7 270 371
- US-B2- 7 568 764
- US-B2- 8 662 561

## Description

### FIELD OF THE INVENTION

The present invention relates to a seat system, in particular a vehicle slouch seat system.

### BACKGROUND OF THE INVENTION

Vehicle seats known as slouch seats have been used in vehicles, particularly as second row or rear row seats. These may be used for example with pickup trucks that have a fixed rear wall of the cab or potentially even with sedans which have a fixed bulkhead, separating the passenger compartment from the rear trunk. Such a rear wall of the truck cab or the rear bulkhead of a vehicle prevents a backrest (seat back) of the vehicle seat from reclining relative to a fixed pivot point of the seat base (cushion). Slouch seats may also be used in airlines and in mass transportation such as in trams and trains. Such a slouch seat may include two separate back frames, a moving frame and a fixed frame. Relative movement between these two frames occurs during positioning of the slouch seat from an upright to a semi-reclined position. The fixed frame may be a part of or attached to the vehicle, such as being a part of the rear wall of a truck.

Although there are various configurations to provide a slouch seat, many slouch seat configurations provide for a backrest with a lower portion that slides forward as the upper portion slides downwardly. This typically also includes a forward movement of the seat base. However, the movement of the backrest and the seat base may generate relative movement with respect to the seat occupant. This relative movement is sometimes termed shirt sheer, a sliding movement of the front surface of the backrest relative to the occupant. In a conventional seat, the recliner (pivot fitting) would be placed at the bottom of the backrest (seat back) and the backrest rotates rearward about the pivot fitting. As the seatback rotates rearward, there is relative motion between the seatback surface and the back of the occupant which can cause the shirt shear.

US 2008/100112 A1 discloses a vehicle seat system comprising a vehicle seat comprising a seat base, a backrest, a seat base track arrangement, a backrest track arrangement comprising a backrest fixed track and a backrest moveable track that is moveable along the backrest fixed track, a link arm, a seat base pivot connection between said link arm and said seat base and a link arm and backrest pivot connection, said seat base track arrangement comprising a seat base fixed track and a seat base movable track that is moveable along the seat base fixed track, said seat base fixed track being connected to a vehicle seat support and said seat base movable track being connected to said seat base, said backrest fixed track being connected to a vehicle backrest support; a locking device connected to said vehicle seat; and a release/lock mechanism connected to said locking device for releasing and locking said locking device.

US 1,756,807 A discloses in combination with a vehicle seat and body, means for supporting the seat whereby a portion thereof is confined to a substantially arcuate path, and means for adjusting the angle of the seat and moving it upon said support comprising a screw mounted on the seat and a nut engaging the screw and means securing the nut to the body to swing relatively thereto.

### SUMMARY OF THE INVENTION

It is an object of the invention to provide a vehicle slouch seat that allows a full range of adjustment including allowing an occupant to recline (slouch) in a fluid motion that does not cause any type of shirt shear.

It is further an object of the invention to provide a vehicle seat which allows a recline (slouch) adjustment based on a configuration which is robust, stable and simple to manufacture.

According to the present invention, a vehicle seat system comprises a vehicle seat comprising a seat base, a backrest, a seat base track arrangement, a backrest track arrangement comprising a backrest fixed track and a backrest moveable track that is moveable along the backrest fixed track, a link arm, a seat base pivot connection between the link arm and the seat base and a link arm and backrest pivot connection between the link arm and the backrest and the backrest movable track. The seat base track arrangement comprises a seat base fixed track and a seat base moveable track that is moveable along the seat base fixed track. The seat base fixed track is connected to a vehicle seat support and the seat base moveable track is connected to the seat base. The backrest fixed track is connected to a vehicle backrest support. A locking device is connected to the vehicle seat. A release/lock mechanism is connected to the locking device for releasing and locking the locking device.

The present invention provides a vehicle seat system that provides a comfort posture alignment slide system. The system uses a linear locking device. The locking device offers infinite adjustment because it uses the forces created from two torsional springs working in tandem with two bushings to lock on a solid shaft. Another linear locking device may be used for this system.

The vehicle seat system includes a horizontally mounted seat track arrangement, which advantageously provides a lower profile to provide a compact seat track arrangement to meet space requirements under a vehicle seat. Instead of a horizontally mounted seat track arrangement, the vehicle seat system may include a vertically mounted seat track arrangement.

The vehicle seat system is a slide system with infinite adjustment that allows an occupant to recline (slouch) in a fluid motion that does not cause any type of shirt shear. There are tracks in two areas in the vehicle seat to achieve this motion: two tracks are below the seat base (cushion) and one track is in the backrest (seatback). A linear locking device may be next to each cushion track so the linear locking devices can be locked into the exact position that the occupant desires. The design offers low release and sliding efforts with infinite adjustment.

A link arm between the cushion track and the seatback track provides a desired kinematic motion. The system is balanced enough between the tracks that no return springs are required. A travel ratio between the cushion track and seatback track is roughly 1.8:1 to 2.2:1 and no pulley system is required to maintain this ratio. The link arm provides this connection. A link arm pivot at the cushion is placed below a hip-point or H-point of the occupant to help provide a fluid motion for the body in this range of recline (slouch) travel.

A linear locking device may be mounted above the cushion tracks to lock each side of a cushion assembly to provide two linear locking devices. The linear locking devices may be released at the same time using a single release handle and cable system so the cushion tracks stay synchronized. A single linear locking device that is capable of larger strength could also be used rather than two locking devices.

An outer track of the seat track arrangement may deflect to create preload in ball bearings to keep the ball bearings in the track assembly and in a consistent position as the track moves.

The linear locking device may be attached to an upper bracket, which may be done with a roll pin or any other suitable fastener, such as a shoulder bolt. A part of the locking device may move with the upper bracket. The upper bracket attaches to the cushion of the seat system and the movable track (inner track) in the track assembly. This provides a moving part of the seat system.

The locking device may be attached to a base of a seat. This provides a static portion of the linear locking device. The fixed (outer) track in the track assembly is also static.

Ball bearings and straws are positioned in a track so they do not contact ball stops during specified track movement. For every 1 mm. the track moves, the ball bearings move 0.5 mm. The straws keep the ball bearing spacing consistent but does not keep the balls/straws synchronized between the two sides of the single track assembly.

Ball cages are an alternative option for keeping the ball bearing spacing consistent not only on one side of the track assembly but both sides since it is connected.

A linear locking device may be mounted separate from the track assemblies under the cushion assembly (closer to a centerline of the seat). The track assemblies may be mounted further apart (closer to the sides of the cushion assembly), which increases stability. The low track profile (mounted horizontally) allows the track assemblies to be mounted so there can be a thinner seat package in these areas. The track assemblies may be mounted vertically if a thinner package space laterally is needed.

A movable track of a track assembly shifts the cushion assembly in the seat system. The link arm connection moves the seatback track simultaneously and keeps the two track systems synchronized during the recliner (slouch) motion.

The moving portion of the linear locking device allows the cushion assembly to shift and also locks the cushion assembly into an exact desired position of the occupant in the seat system since the locking device allows for infinite adjustment.

A seatback track assembly connects to the seatback and link arm. The seatback track assembly shifts the seatback slightly so there is a fluid motion as the occupant reclines/slouches the seat system. The seatback track assembly is mounted almost vertically compared to the cushion track assembly which is mounted almost horizontally.

Two cable assemblies may be provided. Each cable assembly may be connected to one linear locking device such that the locking devices are released simultaneously using a release handle assembly that is mounted on the side of the seat system. A single cable assembly may be used if a single linear locking device is provided.

Plastic bushings may be provided for rotating a drive rod. The plastic bushings reduce free play in handle while maintaining a low, consistent release effort.

Both cable assemblies may be attached to a release arm in a recliner handle housing assembly so both linear locking devices release at the same time. Cable ends of the two cable may be provided separately. The ends of the cable assemblies may be connected to make a loop around the release arm or a splitter may be used to make the two cables become one cable so there is less package space required in the housing assembly. This is one way to release the linear locking devices. Other means could be used to release the linear locking devices, including but not limited to using a button or buttons, a smaller lever, actuators and any other suitable means for releasing the linear locking devices.

It is apparent that the above-described features, which will also be explained below, can be used not only in the particular combination described, but also in other combinations or alone, without going beyond the scope of the present invention.

Preferred exemplary embodiments of the present invention are shown in the drawings and will be explained in more detail in the following description, where identical reference numbers designate identical or similar or functionally identical components. The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### BRIEF DESCRIPTION OF THE DRAWINGS

In the drawings:
Figure 1 is a side view of a vehicle seat system;
Figure 2 is a perspective view of the vehicle seat system of Figure 1;
Figure 3 is a front view of the vehicle seat system of Figure 1;
Figure 4 is an enlarged view of the vehicle seat system of Figure 1;
Figure 5 is a perspective view of a locking device connected to a seat track arrangement;
Figure 6 is a sectional view of the seat track arrangement along line 6-6 of Figure 5.
Figure 7 is a front view of the locking device connected to the seat track arrangement;
Figure 8 is a side view of the locking device and the seat track arrangement;
Figure 9 is a perspective view of the locking device connected to a seat base movable track;
Figure 10 is a perspective view of two ball bearing arrangements;
Figure 11 is an enlarged front view of the seat track arrangement;
Figure 12 is an enlarged front view of the seat track arrangement with a ball bearing arrangement;
Figure 13 is a perspective view of the ball bearing arrangement shown in Figure 12;
Figure 14 is a perspective view of the ball bearing arrangement shown in Figure 12 with ball bearings removed;
Figure 15 is a side view of another embodiment of a vehicle seat system;
Figure 16 is a perspective view of the vehicle seat system of Figure 15;
Figure 17 is a front view of the vehicle seat system of Figure 15;
Figure 18 is an enlarged view of the vehicle seat system of Figure 15;
Figure 19 is a perspective view of an embodiment of a seat track arrangement associated with the vehicle seat system of Figure 15;
Figure 20 is another perspective view of the seat track arrangement of Figure 19;
Figure 21 is another perspective view of the seat track arrangement of Figure 19;
Figure 22 is a sectional view of the seat track arrangement along line 22'-22' of Figure 19;
Figure 23 is a front view of the seat track arrangement of Figure 19;
Figure 24 is a side view of the seat track arrangement of Figure 19;
Figure 25 is a perspective view of the locking device;
Figure 26 is another perspective view of the locking device;
Figure 27 is another perspective view of the locking device;
Figure 28 is a cross sectional view of the locking device;
Figure 29 is a partial cross sectional view of the locking device;
Figure 30 is an enlarged perspective view of the locking device;
Figure 31 is an enlarged perspective view of the locking device;
Figure 32 is a perspective view of a release/lock assembly associated with the vehicle seat system of Figure 1 and the vehicle seat system of Figure 15;
Figure 33 is another perspective view of the release/lock assembly associated with the vehicle seat system of Figure 1 and the vehicle seat system of Figure 15;
Figure 34 is a perspective view of a housing assembly associated with the release/lock assembly of Figure 32;
Figure 35 is a top perspective view of the housing assembly of Figure 34;
Figure 36 is a bottom perspective view of the housing assembly of Figure 34;
Figure 37 is a bottom perspective view of the housing assembly of Figure 34;
Figure 38 is another bottom perspective view of the housing assembly of Figure 34;
Figure 39 is a sectional view of an embodiment of a seat track arrangement;
Figure 40 is a sectional view of an embodiment of a seat track arrangement;
Figure 41 is a sectional view of an embodiment of a seat track arrangement;
Figure 42 is a sectional view of an embodiment of a seat track arrangement;
Figure 43 is a sectional view of an embodiment of a seat track arrangement;
Figure 44 is a sectional view of an embodiment of a seat track arrangement;
Figure 45 is a sectional view of an embodiment of a seat track arrangement; and
Figure 46 is a sectional view of an embodiment of a seat track arrangement.

### DESCRIPTION OF THE PREFERRED EMBODIMENTS

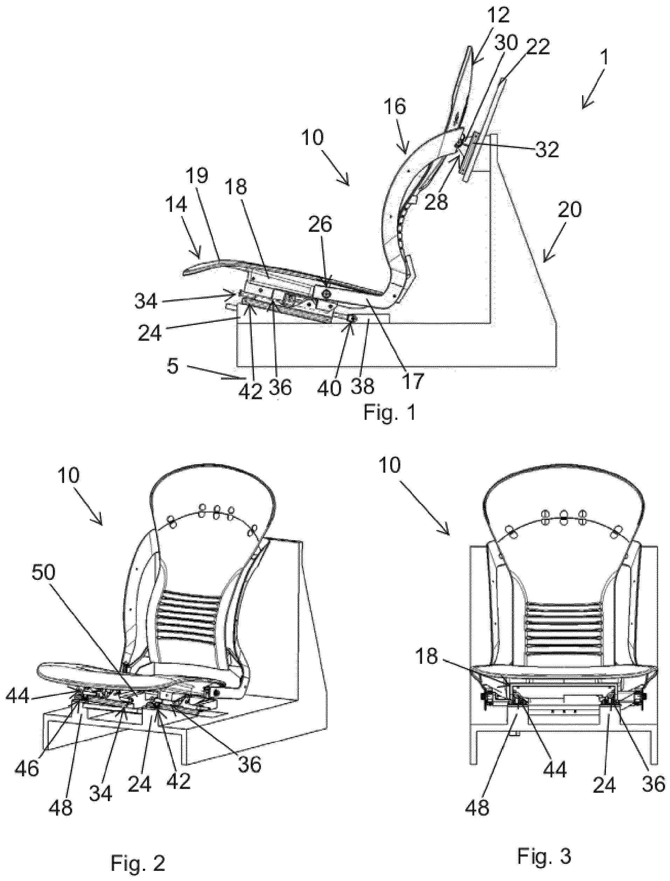

Referring to the drawings in particular, Figure 1 is a side view of a vehicle seat system 1. The vehicle seat system 1 includes a vehicle seat 10. The vehicle seat 10 is shown comprising a backrest (seat back) 12 and a seat base (cushion) 14. A link arm 16 connects the backrest 12 and the seat base 14. The backrest 12 and the seat base 14 are supported on a support frame 20. The support frame 20 may be fixed to a vehicle floor 5. The support frame 20 may also be fixed on a movable track such that the support frame 20 itself may be fixed in a position (such as in a longitudinal set position B along a direction of travel) and displaced along a track, that is fixed in the vehicle floor 5, to change a longitudinal position setting. The seat base 14 comprises a seat base frame 18 with a cushion upper part 19. The seat base 14 may have other configurations including a seat base frame that is formed of side brackets and cross members. The backrest 12 is a so called live back seat back. Such a live back seat back comprises a plastic panel that flexes with back movement of the occupant. The backrest 12 may instead comprise a shell supporting one or more foam pieces covered by trim or may comprise a frame supporting one or more foam pieces covered by trim.

The support frame 20 includes a vehicle backrest support 22 and a connected vehicle seat base support 24. The support frame 20 may include the backrest support 22 separate from the seat base support 24. The backrest support 22 may also be formed as part of the vehicle, such as the rear wall of the cabin of a pickup truck or such as the bulkhead separating the passenger compartment from trunk space. The vehicle seat base support 24 may be formed as part of the vehicle floor 5 or may be a separate support part connected to the vehicle floor 5. The link arm 16 is connected to the seat base 14 by a seat base pivot 26. The seat base pivot 26 is formed at a lower portion 17 of the link arm 16. The link arm 16 and the backrest 12 are connected to the vehicle backrest support 22 by a link arm and backrest pivot connection 28. A backrest fixed track 32 forms part of a backrest track arrangement that also includes a backrest movable track 30, which is movable relative to the backrest fixed track 32.

A locking arrangement 34 is connected to the vehicle seat 10. The locking arrangement 34 includes a locking device 36. The locking device 36 forms part of a longitudinal adjustor. The locking device 36 is connected to a locking device support 38 via a locking device support connection 40. The locking device support 38 is connected to the support frame 20. The locking device support 38 may be formed as an integral part of the support frame 20. A seat track arrangement 42 is connected to the seat base support 24 and the seat base 14.

Figure 2 is a perspective view of the vehicle seat system 1. The locking arrangement 34 includes a locking device 44. The locking device 44 is connected to a locking device support 50. The locking device 44 forms part of a longitudinal adjustor. The locking device support 50 is connected to the support frame 20. The locking device support 50 may be formed as an integral part of the support frame 20. A seat track arrangement 46 is connected to a seat base support 48 and the seat base 14.

Figure 3 is a front view of the vehicle seat system 1. Although the locking arrangement 34 is shown with the locking device 36 and the locking device 44 to provide two locking devices, it is possible that only one locking device may be provided.

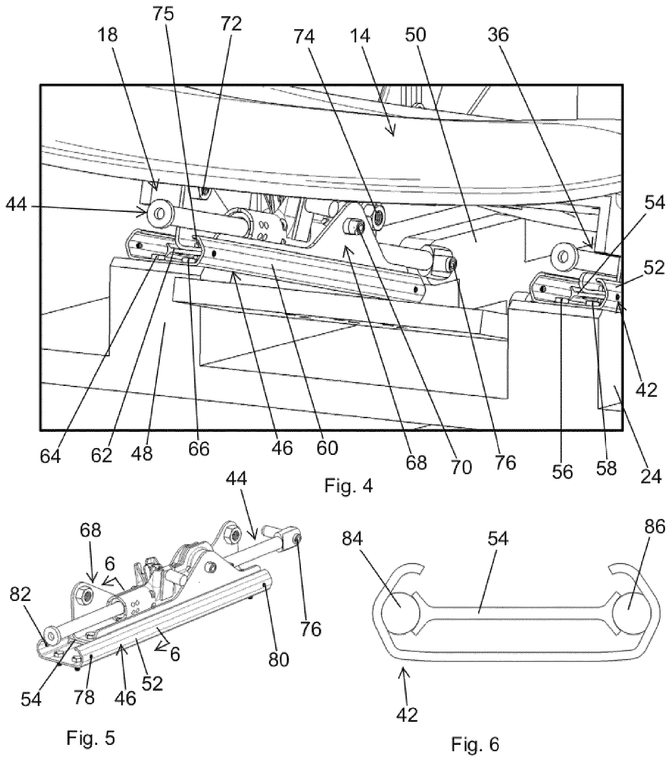

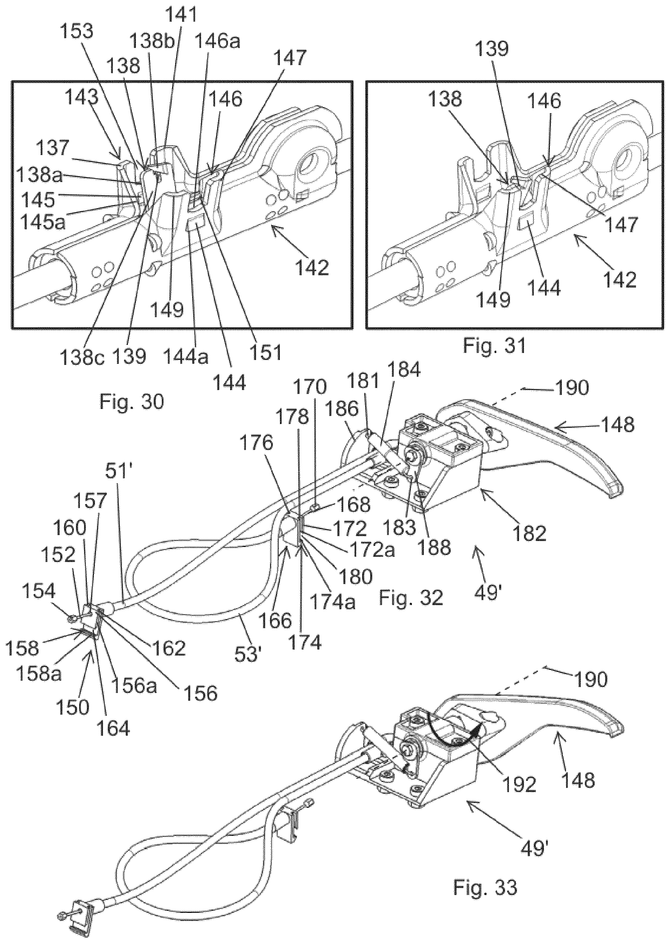

Figure 4 is an enlarged view of the seat 10 in an area of the seat base 14. The track arrangement 42 includes a seat base fixed track (outer track) 52 and a seat base movable track (inner track) 54. The seat base fixed track 52 is fixed on an upper surface of the seat base support 24 via at least fastener 56 and fastener 58. The locking device 36 is connected to the seat base 18 and the seat base movable track 54. The seat track arrangement 46 includes a seat base fixed track (outer track) 60 and a seat base movable track (inner track) 62. The seat base fixed track 60 is fixed on an upper surface of the seat base support 48 via at least fastener 64 and fastener 66. A bracket 68 is connected to the locking device 44 via a fastener 70. The fastener 70 may be any suitable fastener including but not limited to a pin, a screw and rivet. The bracket 68 is connected to the seat base 18 via a fastener 72 and a fastener 74. The bracket 68 is connected to the seat base movable track 62 via at least a fastener 75. The fastener 72, the fastener 74 and the fastener 75 are shown as a screw and a threaded nut, but the fastener 72, the fastener 74 and the fastener 75 may be any suitable fastener including but not limited to a pin and rivet. In another embodiment, the bracket 68 may be welded to the locking device 44, the seat base movable track 62 and the seat base 18. The locking device 44 is connected to a release/lock mechanism via a cable (see Figure 32). The locking device 44 is connected to the locking device support 50 via a fastener 76. In the example shown in Figure 4, the fastener 76 is a pin, but it is understood that the fastener 76 may be any suitable fastener including but not limited to a threaded screw and threaded nut connector or a rivet.

Actuation of the locking device 36 and actuation of the locking device 44 allows a locking and release of the seat base 14 with movement of the seat base moveable track 54 relative to the seat base fixed track 52 and movement of the seat base movable track 62 relative to the seat base fixed track 60. When the locking device 36 is released, the locking device 36 and the seat base movable track 54 move relative to the seat base fixed track 52. When the locking device 44 is released, the locking device 44 and the seat base movable track 62 move relative to the seat base fixed track 60. As the link arm 16 connects the seat base 14 and the backrest 12, the actuation of the locking device 36 and the locking device 44 allows a locking and release of the backrest 12 with movement of the backrest moveable track 30 relative to the backrest fixed track 32.

Figure 5 is a perspective view of the locking device 44 connected to the seat track arrangement 46. The locking device 44 is substantially identical to the locking device 36. The seat track arrangement 46 is substantially identical to the seat track arrangement 42. The seat track arrangement 42 is connected to the locking device 36 in the same manner as the seat track arrangement 46 is connected to the locking device 44. The locking device 36 is connected to the seat base 18 in the same manner as the locking device 44 is connected to the seat base 18. Accordingly, in order to avoid repetition, a description will be provided for the locking device 44 and the seat track arrangement 42 as it is understood that the locking device 36 is similar to the locking device 44 and the seat track arrangement 42 is similar to the seat track arrangement 46 and the manner of connecting the locking device 36 and the seat track arrangement 42 is similar to the manner of connecting the locking device 44 and the seat track arrangement 46. Ball stops 78, 80, 82 are connected to the seat base fixed track 52.

Figure 6 is a sectional view of the seat track arrangement 42 along line 6-6 of Figure 5. The seat base movable track 54 is mounted relative to the seat base fixed track 52 via ball bearings 84, 86.

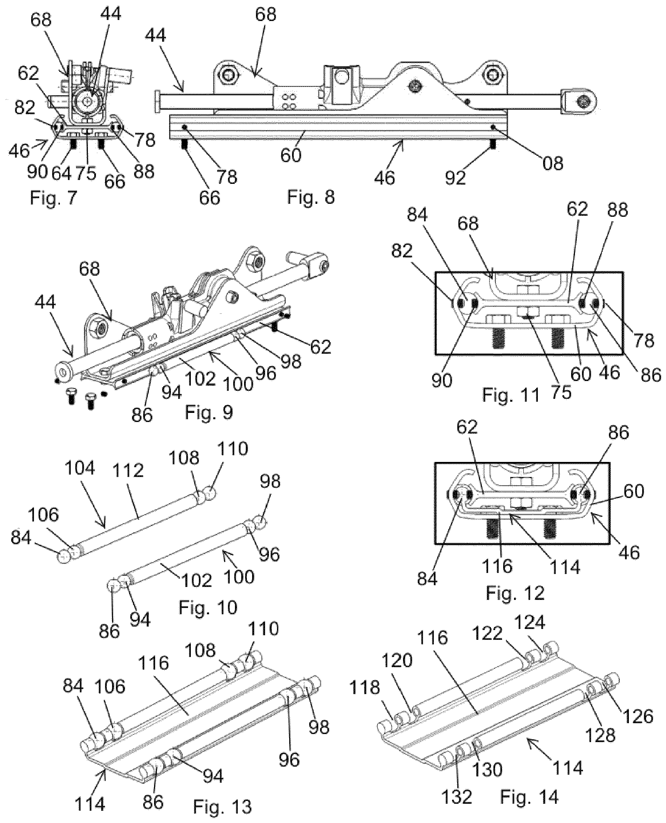

Figure 7 is a front view of the locking device 44 connected to the seat track arrangement 46. Balls stops 88, 90 are connected to the movable track 62. Ball stops 78, 80, 82, 88, 90 ensure that the ball bearings 84, 86 remain between the seat base movable track 62 and the seat base fixed track 60.

Figure 8 is a side view of the locking device 44 and the seat track arrangement 46. A fastener 92 is provided to fasten the seat base fixed track 60 to the upper surface of the seat base support 48. Four fasteners may be used to fix the fixed track 60 to the upper surface of the seat base support 48, however it is understood that any number of fasteners may be used to connect the seat base fixed track to the upper surface of the seat base support 48. In another embodiment, the seat base fixed track 60 may be welded to the upper surface of the seat base support 48.

Figure 9 is a perspective view of the locking device 44 connected to the seat base movable track 62. A ball bearing arrangement 100 is provided between the seat base movable track 62 and the seat base fixed track 60. The ball bearing arrangement 100 includes ball bearings 86, 94, 96, 98 and a ball bearing spacer element (straw spacer) 102. The ball bearing spacer element 102 maintains the ball bearings 86, 94 at a spaced location from the ball bearings 96, 98. It is understood that another ball bearing arrangement 104 (see Figure 10) is provided opposite the ball bearing arrangement 100 on the other side of the seat base movable track 62.

Figure 10 is a perspective view of the ball bearing arrangement 100 and the ball bearing arrangement 104. The ball bearing arrangement 104 includes ball bearings 84, 106, 108, 110 and a ball bearing spacer element (straw spacer) 112. The ball bearing spacer element 112 maintains the ball bearings 84, 106 at a spaced location from the ball bearings 108, 110. Such ball arrangements 100, 104 may also be used with the backrest movable track 30 and the backrest fixed track 32.

Figure 11 is an enlarged front view of the seat track arrangement 46 with the seat base movable track 62 connected to the bracket 68 via the fastener 75.

Figure 12 is an enlarged front view of the seat track arrangement 46 in which the seat base movable track 62 is mounted relative to the seat base fixed track 60 via a ball bearing arrangement 114.

Figure 13 is a perspective view of the ball bearing arrangement 114. The ball bearings 84, 86, 94, 96, 98, 106, 108, 110 are positioned via a ball cage 116 to form the ball bearing arrangement 114. Such a ball cage 116 may also be used with the backrest movable track 30 and the backrest fixed track 32.

Figure 14 is a perspective view of the ball bearing arrangement 114 with the ball bearings 84, 86, 94, 96, 98, 106, 108, 110 removed. The ball cage 116 includes spaces 118, 120, 122, 124, 126, 128, 130, 132 with each space for receiving a ball bearing. Although eight spaces are shown for eight ball bearings, it is understood that any number of spaces may be provided so that the ball cage 116 may be provided with any number of ball bearings.

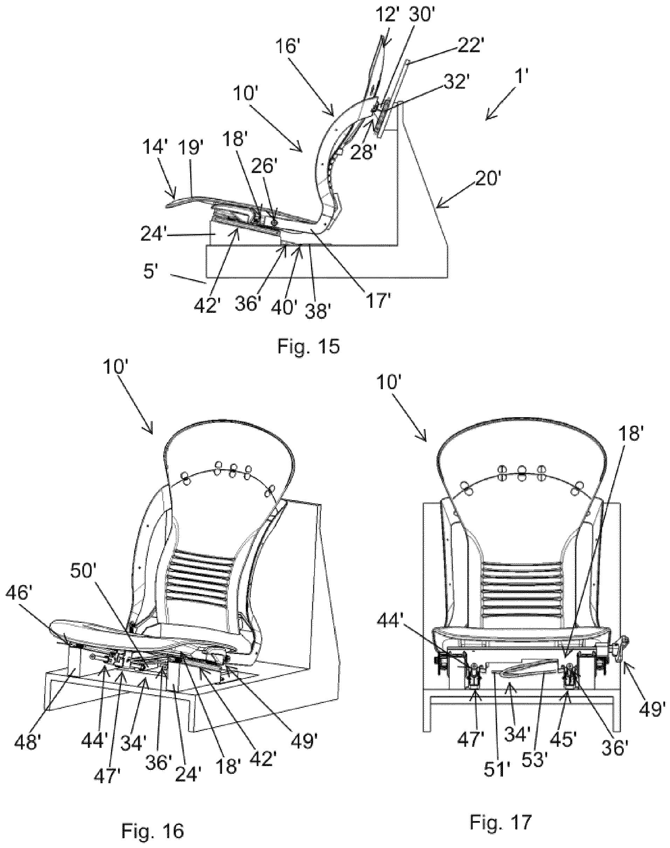

Figure 15 is a side view of a vehicle seat system 1'. The vehicle seat system 1' comprises a vehicle seat 10'. The vehicle seat 10' is shown comprising a backrest (seat back) 12' and a seat base (cushion) 14'. A link arm 16' connects the backrest 12' and the seat base 14'. The backrest 12' and the seat base 14' are supported on a support frame 20'. The support frame 20' may be fixed to a vehicle floor 5'. The support frame 20' may also be fixed on a movable track such that the support frame 20' itself may be fixed in a position (such as in a longitudinal set position B along a direction of travel) and displaced along a track, that is fixed in the vehicle floor 5', to change a longitudinal position setting. The seat base 14' comprises a seat base frame 18' with a cushion upper part 19'. The seat base 14' may have other configurations including a seat base frame that is formed of side brackets and cross members. The backrest 12' is a so called live back seat back. Such a live back seat back comprises a plastic panel that flexes with back movement of the occupant. The backrest 12' may instead comprise a shell supporting one or more foam pieces covered by trim or may comprise a frame supporting one or more foam pieces covered by trim.

The support frame 20' includes vehicle backrest support 22' and a connected vehicle seat base support 24'. The support frame 20' may include the backrest support 22' separate from the seat base support 24'. The backrest support 22' may also be formed as part of the vehicle, such as the rear wall of the cabin of a pickup truck or such as the bulkhead separating the passenger compartment from trunk space. The vehicle seat base support 24' may be formed as part of the vehicle floor 5' or may be a separate support part connected to the vehicle floor 5'. The link arm 16' is connected to the seat base 14' by a seat base pivot 26'. The seat base pivot 26' is formed at a lower portion 17' of the link arm 16'. The link arm 16' and the backrest 12' are connected to the vehicle backrest support 22' by a link arm and backrest pivot connection 28'. A backrest fixed track 32' forms part of a backrest track arrangement that also includes a backrest movable track 30', which is movable relative to the backrest fixed track 32'.

A locking arrangement 34' is connected to the vehicle seat 10'. The locking arrangement 34' includes a locking device 36'. The locking device 36' forms part of a longitudinal adjustor. The locking device 36' is connected to a locking device support 38' via a locking device support connection 40'. The locking device support 38' is connected to the support frame 20'. The locking device support 38' may be formed as an integral part of the support frame 20'. A seat track arrangement 42' is connected to the seat base support 24' and the seat base 14'.

Figure 16 is a perspective view of the vehicle seat system 1'. The locking arrangement 34' includes a locking device 44'. The locking device 44' is connected to a locking device support 50'. The locking device 44' forms part of a longitudinal adjustor. The locking device support 50' is connected to the support frame 20'. The locking device support 50' may be formed as an integral part of the support frame 20'. A seat track arrangement 46' is connected to a seat base support 48' and the seat base 14'. The locking device 44' is connected to the seat base frame 18' via a connector 47'. The connector 47' is shown in the form of a bracket, but it is understood that any type of connector may be used to connect the locking device 44' to the seat base frame 18'. A release/lock assembly 49' is connected to the locking device 36' and the locking device 44'. The release/lock assembly 49' can be actuated to actuate the locking device 36' and the locking device 44' to release the locking device 36' and the locking device 44' and to lock the locking device 36' and the locking device 44'.

Figure 17 is a front view of the vehicle seat system 1'. Although the locking arrangement 34' is shown with the locking device 36' and the locking device 44' to provide two locking devices, it is possible that only one locking device may be provided. The locking device 36' is connected to the seat base frame 18' via a connector 45'. The connector 45' is shown in the form of a bracket, but it is understood that any type of connector may be used to connect the locking device 44' to the seat base frame 18'. The release/lock assembly includes a cable 51' and a cable 53'. The cable 51' is connected to the locking device 44'. The cable 53' is connected to the locking device 36'. A single cable may be provided if only a single locking device is used.

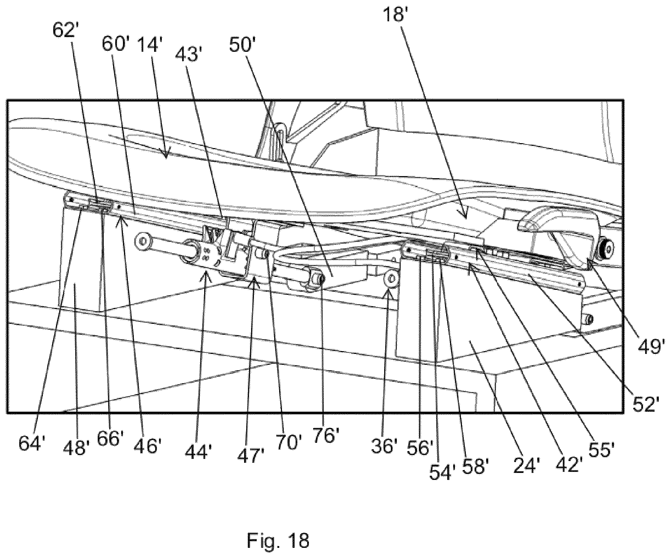

Figure 18 is an enlarged view of the vehicle seat system 1' in an area of the seat base 14'. The track arrangement 42' includes a seat base fixed track 52' and a seat base movable track 54'. The seat base fixed track 52' is fixed on an upper surface of the seat base support 24' via at least a fastener 56' and fastener 58'. A seat base track connector 55' connects the seat base movable track 54' to the seat base frame 18'. The seat track arrangement 46' includes a seat base fixed track 60' and a seat base movable track 62'. The seat base fixed track 60' is fixed on an upper surface of the seat base support 48' via at least fastener 64' and fastener 66'. A seat base track connector 43' connects the seat base movable track 62' to the seat base frame 18'. The locking device 44' is connected to the connector 47' via a fastener 70'. The fastener 70' is shown as a pin or shaft, but it is understood that any suitable fastener may used, including but not limited to a screw and nut fastener or a rivet. In another embodiment, the locking device 44' may be welded to the connector 47'. The locking device 36' is connected to the connector 45' via a fastener in the same way in which the locking device 44' is connected to the connector 47'. The locking device 44' is connected to the locking device support 50' via a fastener 76'. In the example shown in Figure 18, the fastener 76' is a pin, but it is understood that the fastener 76' may be any suitable fastener including but not limited to a threaded screw and threaded nut connector or a rivet.

Actuation of the locking device 36' and actuation of the locking device 44' allows a locking and release of the seat base 14' with movement of the seat base moveable track 54' relative to the seat base fixed track 52' and movement of the seat base movable track 62' relative to the seat base fixed track 60'. When the locking device 36' is released, the seat base movable track 54' moves relative to the seat base fixed track 52'. When the locking device 44' is released, the seat base movable track 62' moves relative to the seat base fixed track 60'. As the link arm 16' connects the seat base 14' and the backrest 12', the actuation of the locking device 36' and the locking device 44' allows a locking and release of the backrest 12' with movement of the backrest moveable track 30' relative to the backrest fixed track 32'.

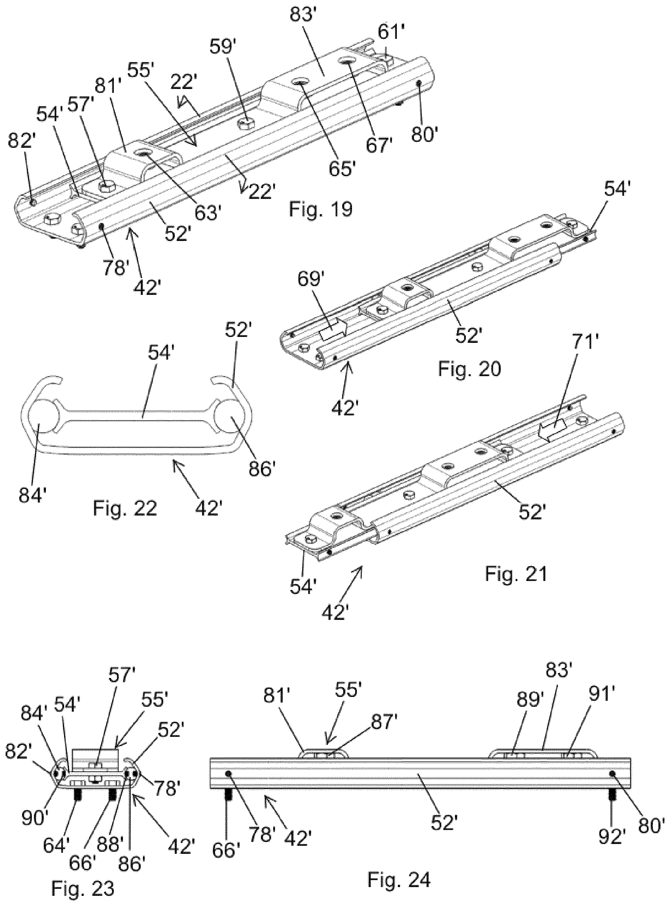

Figure 19 is a perspective view of the seat track arrangement 42'. The seat track arrangement 42' is substantially identical to the seat track arrangement 46'. The seat track arrangement 46' is connected to the seat base frame 18' in the same manner as the seat track arrangement 42' is connected to the seat base frame 18'. Accordingly, in order to avoid repetition, a description is provided for the seat track arrangement 42' as it is understood that the seat track arrangement 42' is similar to the seat track arrangement 46' and the manner of connecting the seat track arrangement 42' is similar to the manner of connecting the seat track arrangement 46' to the seat base frame 18'. Ball stops 78', 80', 82' are connected to the seat base fixed track 52'. The seat base track connector 55' is fixed to an upper surface of the seat base movable track 54' via fasteners 57', 59', 61'. Although three fasteners are shown in the example of Figure 19, it is understood that any number of fasteners may be used. In Figure 19, the fasteners are shown as screw and nut fasteners, but it is understood that any suitable type of fastener may be used. The seat base track connector 55' includes openings 63', 65', 67'. Each of the openings 63', 65', 67' receives a fastener to fix the seat base track connector 55' to the seat base frame 18'. Although three openings are shown in the example of Figure 19, it is understood that any number of openings may be provided. The opening 63' is defined by a raised portion 81' of the seat base track connector 55'. The openings 65', 67' are defined by a raised portion 83' of the seat base track connector 55'. The raised portions 81', 83' are located at a position that is greater than a height of the seat base fixed track 52'. The seat base movable track 54' is movable along the seat base fixed track 52' to position the seat base 14' in a seat base design position as shown in Figure 19.

Figure 20 is a perspective view of the seat track arrangement 42'. The seat base movable track 54' is movable along the seat base fixed track 52' in the direction of arrow 69' to position the seat base 14' in a seat base full recline position.

Figure 21 is a perspective view of the seat track arrangement 42'. The seat base movable track 54' is movable along the seat base fixed track 52' in the direction of arrow 71' to position the seat base 14' in a seat base full upright position.

Figure 22 is a sectional view of the seat track arrangement 42' along line 22-22 of Figure 19. The seat base movable track 54' is mounted relative to the seat base fixed track 52' via ball bearings 84', 86'. The bearing arrangements 100, 104 as shown in Figure 10 may be used to arrange the ball bearings 84', 86' between the seat base movable track 54' and the seat base fixed track 52'. In an alternative embodiment, the bearing arrangement 114 as shown in Figure 13 may be used to arrange the ball bearings 84', 86' between the seat base movable track 54' and the seat base fixed track 52'.

Figure 23 is a front view of the seat track arrangement 42' with the seat base track connector 55' connected to the seat base movable track 54'. Ball stops 78', 82' are connected to the seat base fixed track 52'. Balls stops 88', 90' are connected to the movable track 62. Ball stops 78', 82', 88', 90' ensure that the ball bearings 84', 86' remain between the seat base movable track 54' and the seat base fixed track 52'.

Figure 24 is a side view of the seat track arrangement 42'. The raised portions 81', 83' are provided at a position that is outside of the seat base fixed track 52'. A fastener element 87' is provided at a position below the raised portion 81'. Fastener elements 89', 91' are provided at a position located below the raised portion 83'. In the example shown in Figure 24, the fastener elements are formed as threaded nuts with each nut receiving a threaded screw to connect the seat base track connector 55' to the seat base frame 18', but it is understood that any other suitable fastener may be used.

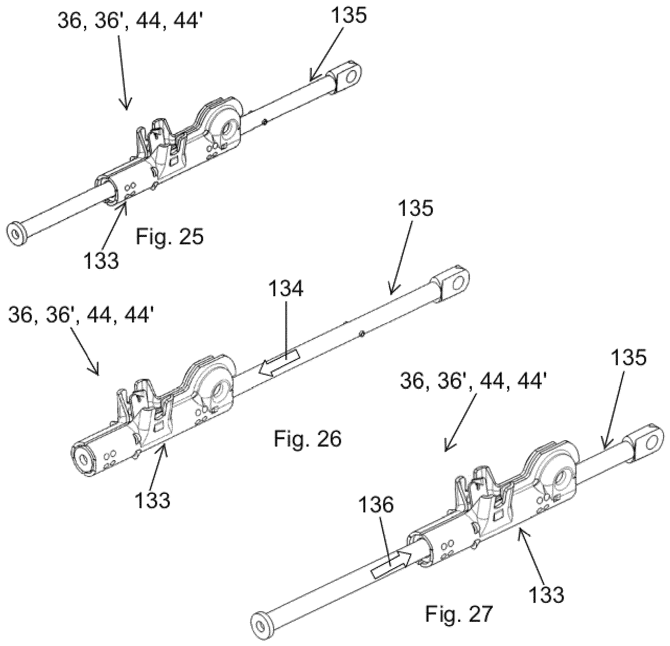

Figure 25 is a perspective view of the locking devices 36, 36', 44, 44'. Each of the locking devices 36, 36', 44, 44' is identical to each other and has the same structure. Each locking device 36, 36', 44, 44' has a movable portion 133 and a fixed element 135. In the example shown in Figure 25, the fixed element 135 is a rod. The movable portion 133 is movable along the fixed element 135 in a seat base design position to position the seat base 14, 14' in a seat base design position as shown in Figure 25.

Figure 26 is a perspective view of the locking devices 36, 36', 44, 44'. The movable portion 133 is movable in the direction of arrow 134 along the fixed element 135 to position the seat base 14,14' in a seat base full recline position.

Figure 27 is a perspective view of the locking devices 36, 36', 44, 44'. The movable portion 133 is movable in the direction of arrow 136 along the fixed element 135 to position the seat base 14, 14' in a seat base full upright position.

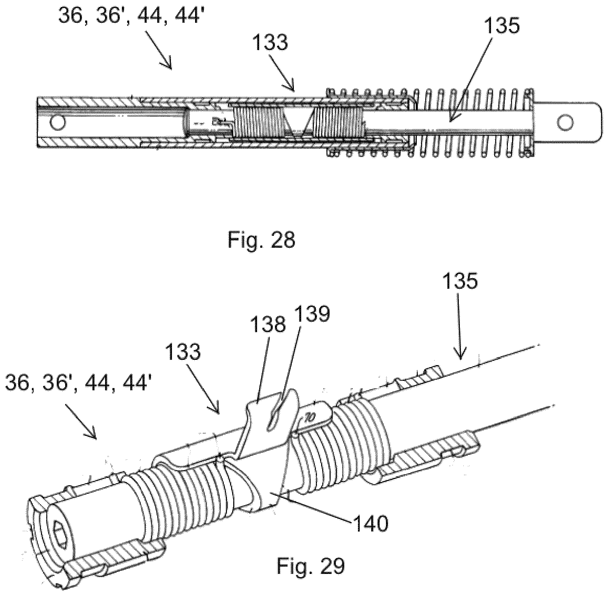

Figure 28 is a cross sectional view of the locking devices 36, 36', 44, 44' and Figure 29 is a partial cross-sectional view of the locking devices 36, 36', 44, 44'. Each of the locking devices 36, 36', 44, 44' has an arm (handle) 138 and a wedge bushing 140. The arm 138 forms a handle and has a slot 139 for receiving a cable. The arm 138 can be actuated to lock and release the movable portion 133. The features of the locking devices 36, 36', 44, 44' is disclosed in U.S. Patent 5,794,470, the entire contents of which are incorporated herein by reference. The example of the locking devices shown in Figures 28 and 29 is one example of the locking devices that are provided to lock and release the seat base 14, 14'. In other embodiments, each of the locking devices 36, 36', 44, 44' may have the features disclosed in U.S. patents: 5,157,826, 8,038,220, 5,441,129, 5,219,045, 5,150,771, 4,880,084, 4,577,730, 4,457,406, 4,425,987, 4,411,339, 3,874,480 and 5,568,843. The entire contents of each of US 5,157,826, US 8,038,220, US 5,794,470, US 5,441,129, US 5,219,045, US 5,150,771, US 4,880,084, US 4,577,730, US 4,457,406, US 4,425,987, US 4,411,339, US 3,874,480 and US 5,568,843 are incorporated herein by reference.

Figure 30 is an enlarged perspective view of the locking devices 36, 36', 44, 44'. Each of the locking devices 36, 36', 44, 44' includes a housing 142. The housing 142 has a housing projection 144 and an upper housing portion 146 with an upward extending portion 147 and an upward extending portion 149. An opening 151 is provided between the upward extending portion 147 and the upward extending portion 149. The housing 142 has a housing projection 145 and an upper housing portion 143 with an upward extending portion 141 and an upward extending portion 137. An opening 153 is provided between the upward extending portion 141 and the upward extending portion 137. The arm 138 is in a locked position in Figure 30 such that the movable portion 133 is locked to the fixed element 135 so that the movable portion 133 does not move relative to the fixed element 135.

Figure 31 is an enlarged perspective view of the locking devices 36, 36', 44, 44'. The arm 138 is in a released position in Figure 31 such that the movable portion 133 moves relative to the fixed element 135.

Figure 32 is a perspective view of the release/lock assembly 49'. The release/lock assembly 49' actuates the locking devices 36, 36', 44, 44' to lock and release the locking devices 36, 36', 44, 44'. The release/lock assembly 49' includes an actuator 148. In the example shown in Figure 32, the actuator 148 is in the form of a handle, however it is understood that the actuator 148 may be any suitable actuator, including but not limited to a button or a lever. A cable connecting structure 150 is connected to the cable connector 51'. The cable connecting structure 150 may be in the form of a clip. The cable connecting structure 150 includes a lip (projection) 158, a housing connector portion 156, a slot 160, a slot 162 and an opening 164. The cable connector 51' comprises a cable 152. The cable 152 has a cable end portion 154 that has a width that is greater than a width of an opening 157 in the housing connector portion 156 such that the cable end portion 154 cannot pass through the opening 157.

A cable connecting structure 166 is connected to the cable connector 53'. The cable connecting structure 166 may be in the form of a clip. The cable connector 53' comprises a cable 168. The cable connecting structure 166 includes a lip (projection) 174 provided on an outer surface of the cable connecting structure 166, a housing connector portion 172, a slot 176, a slot 178 and an opening 180. The cable 168 has a cable end portion 170 that has a width that is greater than a width of an opening in the housing connector portion 172 such that the cable end portion 170 cannot pass through the opening. The release/lock mechanism 49' includes a housing assembly 182. The actuator 148 is connected to a lever arm 188. The lever arm 188 includes an opening 183. The housing assembly 182 includes a housing projection 186. The housing projection 186 extends in an upward direction. The housing projection 186 includes an opening 181. A spring 184 is connected to the lever arm 183 and the housing projection 186. A portion of the spring 184 is inserted in the opening 181 and another portion of the spring 184 is inserted in the opening 183. The actuator 148 is pivotable about a pivot axis 190. The release/lock mechanism 49' is shown in a locked position in Figure 32.

The cable connecting structure 150 is connected to the housing 142 of one of the locking devices 36, 36', 44, 44' (see Figures 5, 9 and 18) by moving the cable connecting structure 150 from a position above the housing 142 downward in a direction of the opening 151 and the upper housing portion 146 such that a snap in retaining connection is generated as the lip 158 passes over the projection 144 to connect the lip 158 to the projection 144. A portion of the cable connecting structure 150 is arranged in the opening 151 and is provided between the upward extending portion 147 and the upward extending portion 149 (see Figures 5, 9 and 18). A surface 158a of the lip 158 engages an outer surface 144a of the projection 144 to fix the lip 158 to the projection 144. A portion of the upward extending portion 149 is provided in the slot 162 and a portion of the upward extending portion 147 is arranged in the slot 160 when the cable connecting structure 150 is connected to the housing 142. An inner surface 156a of the housing connector portion 156 engages (contacts) an inner surface 146a of the housing portion 146. The cable 152 extends through the slot 139 such that a portion of the cable 152 is arranged in the slot 139. The cable end portion 154 engages a surface 138a of the arm 138 to fix the cable 152 to the arm 138. A portion 138b of the arm 138 extends above the cable 152 to prevent the cable 152 from coming out of the slot 139.

The cable connecting structure 166 is connected to the housing 142 of another one of the locking devices 36, 36', 44, 44' by moving the cable connecting structure 166 from a position above the housing 142 downward in a direction of the opening 153 and the upper housing portion 143 such that a snap in retaining connection is generated as the lip 174 passes over the projection 145 to connect the lip 174 to the projection 145. A portion of the cable connecting structure 166 is arranged in the opening 153 and is provided between the upward extending portion 137 and the upward extending portion 141. A surface 174a of the lip 174 engages an outer surface 145a of the projection 145 to fix the lip 174 to the projection 145. A portion of the upward extending portion 141 is provided in the slot 176 and a portion of the upward extending portion 137 is arranged in the slot 178 when the cable connecting structure 166 is connected to the housing 142. An inner surface 172a of the housing connector portion 172 engages (contacts) an inner surface 146a of the housing portion 146 when the cable connecting structure 166 is connected to the housing 142. The cable 168 extends through the slot 139 such that a portion of the cable 168 is arranged in the slot 139. The cable end portion 170 engages a surface 138c of the arm 138 to fix the cable 168 to the arm 138. The portion 138b of the arm 138 extends above the cable 168 to prevent the cable 168 from coming out of the slot 139.

Figure 33 is a perspective view of the release/lock assembly 49'. The actuator 148 is pivoted about the pivot axis 190 when the actuator 148 is actuated. Actuating the actuator 148 moves the cable 152 to move the arm 138 of the locking device 36, 36' from a locked position to a released position to release the locking device 36, 36' and moves the cable 168 to move the arm 138 of the locking device 44, 44' from a locked position to a released position to release the locking device 44, 44'. Actuation of the actuator 148 moves the lever arm 188, which stretches the spring 184 to tension the spring 188. The release/lock mechanism 49' is shown in a released position in Figure 33 in which the actuator 148 has been actuated.

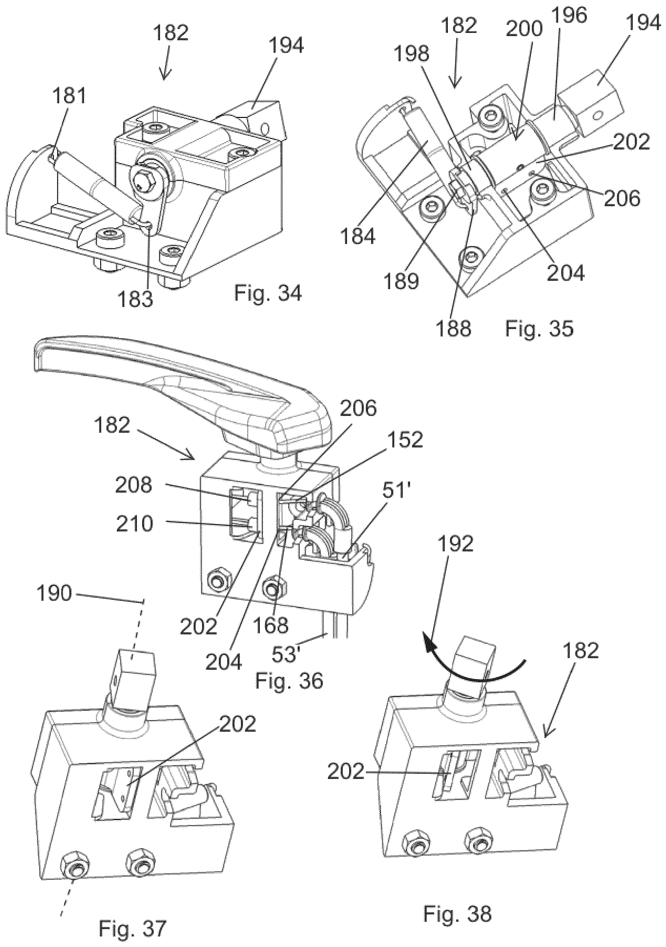

Figure 34 is a perspective view of the housing assembly 182 with the actuator 148 disconnected from the housing assembly 182. A actuator connecting portion 194 is connected to the housing assembly 182.

Figure 35 is a top perspective view of the housing assembly 182. The actuator connecting portion 194 is connected to a drive rod 200. A bushing 196 and a bushing 198 are connected to the drive rod 200. The bushing 196 and the bushing 198 may be formed of plastic, but any material may be used to form the bushing 196 and the bushing 198. The bushing 196 and the bushing 198 are in contact with the housing 182. The bushing 196 is adjacent to the actuator connecting portion 194. The bushing 198 is adjacent to the lever arm 188. The lever arm 188 is connected to the drive rod 200 via a fastener 189. The drive rod 200 is connected to a release arm 202. The release arm 202 has an opening 204 and an opening 206.

Figure 36 is a bottom perspective view of the housing assembly 182. The cable 152 and the cable 168 are connected to the release arm 202. The cable 152 extends through the opening 206. The cable 168 extends through the opening 204. The cable 152 has a cable end portion 208 that has a width that is greater than a width of the opening 206 such that the cable end portion 208 cannot fit through the opening 206. The cable 168 has a cable end portion 210 that has a width that is greater than a width of the opening 204 such that the cable end portion 210 cannot fit through the opening 204. In another embodiment, instead of attaching each cable individually to the release arm, the cables may be connected to a splitter to make the two cables become one cable, which is connected to the release arm.

Figure 37 is a bottom perspective view of the housing assembly 182. The actuating connector portion 194 is in a locked position in Figure 37 such that the locking device 36, 36' and the locking device 44, 44' are in a locked position.

Figure 38 is a bottom perspective view of the housing assembly 182. The actuating connector portion 194 is actuated from a locked position to a released position such that the release arm 202 is actuated, which actuates the arm 138 of the locking device 36, 36' from the locked position to the released position to release the locking device 36, 36' and actuates the arm 138 of the locking device 44, 44' from the locked position to the released position to release the locking device 44, 44'. Figure 38 shows the actuating connector portion 194 and the release arm 202 in the released position.

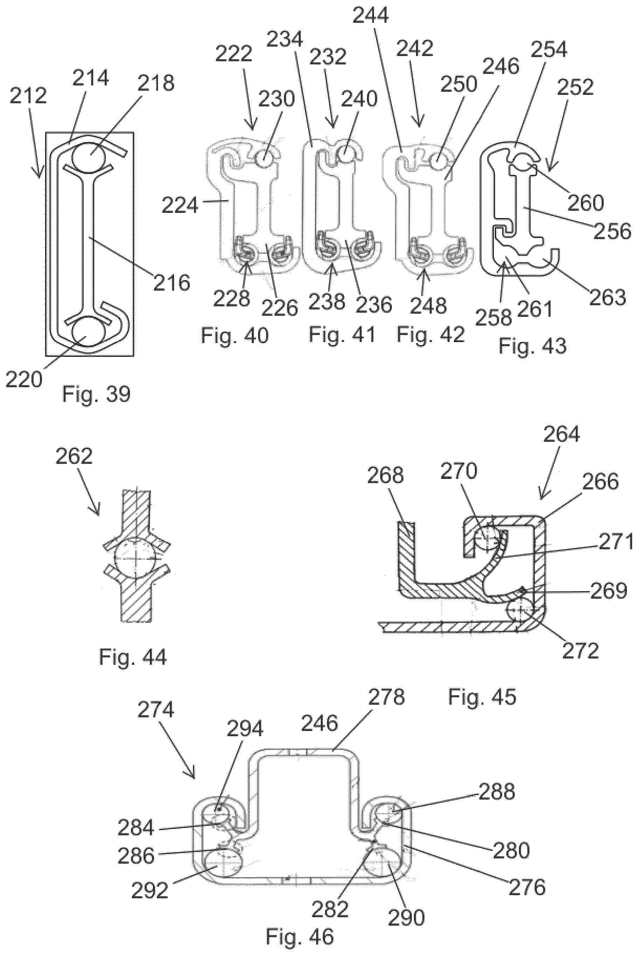

Figures 39, 40, 41, 42, 43, 44, 45 and 46 show different embodiments of a seat track arrangement, which can be used instead of the seat track arrangements 42, 42', 46, 46'. Figure 39 shows a sectional view of a seat track arrangement 212 having a seat base fixed track 214 and a seat base movable track 216. The seat base movable track 216 is mounted relative to the seat base fixed track 214 via ball bearings 218, 220.

Figure 40 shows a sectional view of a seat track arrangement 222 having a seat base fixed track 224 and a seat base movable track 226. The seat base movable track 226 is mounted relative to the seat base fixed track 224 via a ball bearing arrangement 228 that includes ball bearing 230.

Figure 41 shows a sectional view of a seat track arrangement 232 having a seat base fixed track 234 and a seat base movable track 236. The seat base movable track 236 is mounted relative to the seat base fixed track 234 via a ball bearing arrangement 238 that includes ball bearing 240.

Figure 42 shows a sectional view of a seat track arrangement 242 having a seat base fixed track 244 and a seat base movable track 246. The seat base movable track 246 is mounted relative to the seat base fixed track 244 via a ball bearing arrangement 248 that includes ball bearing 250.

Figure 43 shows a sectional view of a seat track arrangement 252 having a seat base fixed track 254 and a seat base movable track 256. The seat base movable track 256 is mounted relative to the seat base fixed track 254 via a ball bearing arrangement 258 that includes spaces 260, 261, 263 for receiving ball bearings.

Figure 44 is a cross sectional view of a seat track arrangement 262. The seat track arrangement 262 has the features disclosed in U.S. patent publication 2006165321 A1, the entire contents of which are incorporated herein by reference.

Figure 45 is a cross sectional view of a seat track arrangement 264 having a seat base fixed track 266 and a seat base movable track 268. The seat base movable track 268 is mounted relative to the seat base fixed track 266 via ball bearings 270, 272. A portion 269 of the seat base movable track 268 engages the ball bearing 272. A portion 271 of the seat base movable track 268 engages the ball bearing 270.

Figure 46 is a cross sectional view of a seat track arrangement 274 having a seat base fixed track 276 and a seat base movable track 278. The seat base movable track 278 is mounted relative to the seat base fixed track 276 via ball bearings 288, 290, 292, 294. The seat base movable track 278 has surfaces 280, 282, 284, 286. Each of the surfaces 280, 282, 284, 286 engages one of the ball bearings 288, 290, 292, 294.

### LIST OF REFERENCE CHARACTERS

- 1: Vehicle seat system
- 1': Vehicle seat system
- 5: Vehicle floor
- 5': Vehicle floor
- 10: Vehicle seat
- 10': Vehicle seat
- 12: Backrest (seat back)
- 12': Backrest (seat back)
- 14: Seat base (cushion)
- 14': Seat base (cushion)
- 16: Link arm
- 16': Link arm
- 18: Seat base frame
- 18': Seat base frame
- 19: Cushion upper part
- 19': Cushion upper part
- 20: Support frame
- 20': Support frame
- 22: Backrest support
- 22': Backrest support
- 24: Seat base support
- 24': Seat base support
- 26: Seat base pivot
- 26': Seat base pivot
- 28: Link arm and backrest pivot connection
- 28': Link arm and backrest pivot connection
- 30: Backrest movable track
- 30': Backrest movable track
- 32: Backrest fixed track
- 32': Backrest fixed track
- 34: Locking arrangement
- 34': Locking arrangement
- 36: Locking device
- 36': Locking device
- 38: Locking device support
- 38': Locking device support
- 40: Locking device support connection
- 40': Locking device support connection
- 42: Seat track arrangement
- 42': Seat track arrangement
- 43': Seat base track connector
- 44: Locking device
- 44': Locking device
- 45': Connector
- 46: Seat track arrangement
- 46': Seat track arrangement
- 47': Connector
- 48: Seat base support
- 48': Seat base support
- 49': Release/lock assembly
- 50: Locking device support
- 50': Locking device support
- 51': Cable
- 52: Seat base fixed track
- 52': Seat base fixed track
- 53': Cable
- 54: Seat base movable track
- 54': Seat base movable track
- 55': Seat base track connector
- 56: Fastener
- 56': Fastener
- 57': Fastener
- 58: Fastener
- 58': Fastener
- 59': Fastener
- 60: Seat base fixed track
- 61': Fastener
- 62: Seat base movable track (inner track)
- 63': Opening
- 64: Fastener
- 64': Fastener
- 65': Opening
- 66: Fastener
- 66': Fastener
- 67': Opening
- 68: Bracket
- 69': Arrow
- 70: Fastener
- 70': Fastener
- 71': Arrow
- 72: Fastener
- 74: Fastener
- 75: Fastener
- 76: Fastener
- 76': Fastener
- 78: Ball stop
- 78': Ball stop
- 80: Ball stop
- 80': Ball stop
- 81': Raised portion
- 82: Ball stop
- 82': Ball stop
- 83': Raised portion
- 84: Ball bearing
- 84': Ball bearing
- 86: Ball bearing
- 86': Ball bearing
- 87': Fastener element
- 88: Ball stop
- 88': Ball stop
- 89': Fastener element
- 90: Ball stop
- 90': Ball stop
- 91': Fastener element
- 92: Fastener
- 94: Ball bearing
- 96: Ball bearing
- 98: Ball bearing
- 100: Ball bearing arrangement
- 102: Ball bearing spacer element (straw spacer)
- 104: Ball bearing arrangement
- 106: Ball bearing
- 108: Ball bearing
- 110: Ball bearing
- 112: Ball bearing spacer element (straw spacer)
- 114: Ball bearing arrangement
- 116: Ball cage
- 118: Space
- 120: Space
- 122: Space
- 124: Space
- 126: Space
- 128: Space
- 130: Space
- 132: Space
- 133: Movable portion
- 134: Arrow
- 135: Fixed element
- 136: Arrow
- 137: Upward extending portion
- 138: Arm (handle)
- 138a: Surface of arm
- 138b: Portion of arm
- 138c: Surface of arm
- 139: Slot
- 140: Wedge bushing
- 141: Upward extending portion
- 142: Housing
- 143: Upper housing portion
- 144: Projection
- 144a: Outer surface of projection
- 145: Housing projection
- 145a: Outer surface of the housing projection
- 146: Upper housing portion
- 146a: Inner surface of the housing portion
- 147: Upward extending portion
- 148: Actuator
- 149: Upward extending portion
- 150: Cable connecting structure
- 151: Opening
- 152: Cable
- 153: Opening
- 154: Cable end portion
- 156: Housing connector portion
- 156a: Inner surface of housing connector portion
- 157: Opening
- 158: Lip (projection)
- 158a: Surface of the lip
- 160: Slot
- 162: Slot
- 164: Opening
- 166: Cable connecting structure
- 168: Cable
- 170: Cable end portion
- 172: Housing connector portion
- 172a: Inner surface of the housing connector portion
- 174: Lip (projection)
- 174a: Surface of the lip
- 176: Slot
- 178: Slot
- 180: Opening
- 181: Opening
- 182: Housing assembly
- 183: Lever arm
- 184: Spring
- 186: Housing projection
- 188: Spring
- 189: Fastener
- 190: Pivot axis
- 194: Actuator connecting portion
- 196: Bushing
- 198: Bushing
- 200: Drive rod
- 202: Release arm
- 204: Opening
- 206: Opening
- 208: Cable end portion
- 210: Cable end portion
- 212: Seat track arrangement
- 214: Seat base fixed track (outer track)
- 216: Seat base movable track (inner track)
- 218: Ball bearing
- 220: Ball bearing
- 222: Seat track arrangement
- 224: Seat base fixed track (outer track)
- 226: Seat base movable track (inner track)
- 228: Ball bearing arrangement
- 230: Ball bearing
- 232: Seat track arrangement
- 234: Seat base fixed track (outer track)
- 236: Seat base movable track (inner track)
- 238: Ball bearing arrangement
- 240: Ball bearing
- 242: Seat track arrangement
- 244: Seat base fixed track (outer track)
- 246: Seat base movable track (inner track)
- 248: Ball bearing arrangement
- 250: Ball bearing
- 252: Seat track arrangement
- 254: Seat bas fixed track (outer track)
- 256: Seat base movable track (inner track)
- 258: Ball bearing arrangement
- 260: Space for receiving ball bearing
- 261: Space for receiving ball bearing
- 262: Seat track arrangement
- 263: Space for receiving ball bearing
- 264: Seat track arrangement
- 266: Seat base fixed track (outer track)
- 268: Seat base movable track (inner track)
- 269: Portion of seat base movable track
- 270: Ball bearing
- 271: Portion of seat base movable track
- 272: Ball bearing
- 274: Seat track arrangement
- 276: Seat base fixed track (outer track)
- 278: Seat base movable track (inner track)
- 280: Surface of seat base movable track
- 282: Surface of seat base movable track
- 284: Surface of seat base movable track
- 286: Surface of seat base movable track
- 288: Ball bearing
- 290: Ball bearing
- 292: Ball bearing
- 294: Ball bearing

## Claims

1. A vehicle seat system (1, 1') comprising:
a vehicle seat (10, 10') comprising a seat base (14, 14'), a backrest (12, 12'), a seat base track arrangement, a backrest track arrangement comprising a backrest fixed track (32, 32') and a backrest moveable track (30, 30') that is moveable along the backrest fixed track (32, 32'), a link arm (16, 16'), a seat base pivot connection between said link arm (16, 16') and said seat base (14, 14') and a link arm and backrest pivot connection (28, 28'), said seat base track arrangement comprising a seat base fixed track (52, 52') and a seat base movable track (54, 54') that is moveable along the seat base fixed track (52, 52'), said seat base fixed track (52, 52') being connected to a vehicle seat support and said seat base movable track (54, 54') being connected to said seat base (14, 14'), said backrest fixed track (32, 32') being connected to a vehicle backrest support (22, 22');
a locking device (36, 36') connected to said vehicle seat (10, 10,);
a release/lock mechanism (49') connected to said locking device (36, 36') for releasing and locking said locking device (36, 36'),
**characterized in that**,
the link arm and backrest pivot connection (28, 28') is arranged between said link arm (16, 16') and said backrest (12, 12') and said backrest movable track (30, 30');
the backrest (12, 12') and the seat base (14, 14') are supported on a support frame (20, 20'), and
the locking device (36, 36') is connected to a locking device support (38, 38') via a locking device support connection (40, 40'), wherein the locking device support (38, 38') is connected to the support frame (20, 20').

2. A vehicle seat system (1, 1') in accordance with claim 1, wherein said locking device (36, 36') is connected to said seat base (14, 14').

3. A vehicle seat system (1, 1') in accordance with claim 2, further comprising:
another locking device (44, 44'), said another locking device (44, 44') being connected to said seat base (14, 14') and said release/lock mechanism (49'), wherein actuation of said release/lock mechanism (49') simultaneously actuates said locking device (36, 36') and said another locking device (44, 44').

4. A vehicle seat system (1) in accordance with claim 3, wherein said seat base track arrangement comprises another seat base track arrangement comprising another seat base fixed track (60) and another seat base movable track (62), said another seat base fixed track (60) being connected to another vehicle seat support, said locking device (36) and said another locking device (44) being arranged between said vehicle seat support and said another vehicle seat support.

5. A vehicle seat system (1') in accordance with claim 3, wherein said seat base track arrangement comprises another seat base track arrangement comprising another seat base fixed track (60') and another seat base movable track (62'), said another seat base fixed track (60') being connected to another vehicle seat support, said locking device (36') and said another locking device (44') being arranged between said seat track arrangement and said another seat track arrangement.

6. A vehicle seat system (1) in accordance with claim 1, wherein said locking device (36) is arranged between said seat base (14) and said seat base movable track (54).

7. A vehicle seat system (1) in accordance with claim 6, further comprising:
another locking device (44), said another locking device (44) being connected to said seat base (14) and said release/lock mechanism (49'), wherein actuation of said release/lock mechanism (49') simultaneously actuates said locking device (36) and said another locking device (44).

8. A vehicle seat system (1) in accordance with claim 7, wherein said seat base track arrangement comprises another seat base track arrangement comprising another seat base fixed track (60) and another seat base movable track (62), said another seat base fixed track (60) being connected to another vehicle seat support, said another locking device (44) being arranged between said seat base (14) and said another seat base movable track (62).

9. A vehicle seat system (1) in accordance with claim 7, wherein said seat base track arrangement comprises another seat base track arrangement comprising another seat base fixed track (60) and another seat base movable track (62), said another seat base fixed track (60) being connected to another vehicle seat support, said another locking device (44) being fixed to said seat base (14) and said another seat base movable track (62).

10. A vehicle seat system (1, 1') in accordance with claim 1, wherein said release/lock mechanism (49') actuates said locking device (36, 36') between a locked state and a released state, said seat base (14, 14') and said backrest (12, 12') being movable in said released state, said seat base (14, 14') and said backrest (12, 12') being in a fixed position in said locked state.

11. A vehicle seat system (1, 1') in accordance with claim 1, wherein said seat base fixed track (52, 52') and said seat base movable track (54, 54') are mounted horizontally relative to said vehicle seat support.

12. A vehicle seat system (1, 1') in accordance with claim 1, wherein said seat base track arrangement comprises a seat base movable track connector (43', 55'), said seat base movable track connector being directly connected to said seat base (14, 14') and said seat base movable track (54, 54').

13. A vehicle seat system (1, 1') in accordance with claim 1, wherein said release/lock mechanism (49') comprises plastic bushings (196, 198), an actuator (148) and a drive rod (200), said plastic bushings (196, 198) being connected to said drive rod (200).

14. A vehicle seat system (1, 1') in accordance with claim 13, wherein said release/lock mechanism (49') comprises a cable (152), said cable (152) being connected to said locking device (36, 36'), said drive rod (200) and said actuator (148).

15. A vehicle seat system (1, 1') in accordance with claim 13, further comprising:
another locking device (44, 44'), said release mechanism (49') comprising another cable (168), said another cable (168) being connected to said another locking device (44, 44'), wherein actuation of said actuator (148) simultaneously actuates said cable (152) and said another cable (168) via said drive rod (200) such that said locking device (36, 36') and said another locking device (44, 44') are actuated from one of a locked state and a released state to another one of said locked state and said released state.

## Patentansprüche

1. Fahrzeugsitzsystem (1, 1'), umfassend:
einen Fahrzeugsitz (10, 10'), der einen Sitzträger (14, 14'), eine Rückenlehne (12, 12'), eine Sitzträgerschienenanordnung, eine Rückenlehnenschienenanordnung, die eine feststehende Rückenlehnenschiene (32, 32') und eine bewegliche Rückenlehnenschiene (30, 30'), die entlang der feststehenden Rückenlehnenschiene (32, 32') beweglich ist, umfasst, einen Verbindungsgliedarm (16, 16'), eine Sitzträgerschwenkverbindung zwischen dem Verbindungsgliedarm (16, 16') und dem Sitzträger (14, 14') und eine Verbindungsgliedarm- und Rückenlehnenschwenkverbindung (28, 28') umfasst, wobei die Sitzträgerschienenanordnung eine feststehende Sitzträgerschiene (52, 52') und eine bewegliche Sitzträgerschiene (54, 54'), die entlang der feststehenden Sitzträgerschiene (52, 52') beweglich ist, umfasst, wobei die feststehende Sitzträgerschiene (52, 52') mit einer Fahrzeugsitzstütze verbunden ist und die bewegliche Sitzträgerschiene (54, 54') mit dem Sitzträger (14, 14') verbunden ist, wobei die feststehende Rückenlehnenschiene (32, 32') mit einer Fahrzeugrückenlehnenstütze (22, 22') verbunden ist,
eine Arretierungsvorrichtung (36, 36'), die mit dem Fahrzeugsitz (10, 10') verbunden ist,
einen Freigabe-/Arretierungsmechanismus (49'), der zum Freigeben und Arretieren der Arretierungsvorrichtung (36, 36') mit der Arretierungsvorrichtung (36, 36') verbunden ist,
**dadurch gekennzeichnet, dass**
die Verbindungsgliedarm- und Rückenlehnenschwenkverbindung (28, 28') zwischen dem Verbindungsgliedarm (16, 16') und der Rückenlehne (12, 12') und der beweglichen Rückenlehnenschiene (30, 30') angeordnet ist,
die Rückenlehne (12, 12') und der Sitzträger (14, 14')auf einem Stützrahmen (20, 20') gestützt sind und
die Arretierungsvorrichtung (36, 36') über eine Arretierungsvorrichtungsstützenverbindung (40, 40') mit einer Arretierungsvorrichtungsstütze (38, 38') verbunden ist, wobei die Arretierungsvorrichtungsstütze (38, 38') mit dem Stützrahmen (20, 20') verbunden ist.

2. Fahrzeugsitzsystem (1, 1') nach Anspruch 1, wobei die Arretierungsvorrichtung (36, 36') mit dem Sitzträger (14, 14') verbunden ist.

3. Fahrzeugsitzsystem (1, 1') nach Anspruch 2, ferner umfassend:
eine weitere Arretierungsvorrichtung (44, 44'), wobei die weitere Arretierungsvorrichtung (44, 44') mit dem Sitzträger (14, 14') und dem Freigabe-/Arretierungsmechanismus (49') verbunden ist, wobei durch eine Betätigung des Freigabe-/Arretierungsmechanismus (49') gleichzeitig die Arretierungsvorrichtung (36, 36') und die weitere Arretierungsvorrichtung (44, 44') betätigt werden.

4. Fahrzeugsitzsystem (1) nach Anspruch 3, wobei die Sitzträgerschienenanordnung eine weitere Sitzträgerschienenanordnung umfasst, die eine weitere feststehende Sitzträgerschiene (60) und eine weitere bewegliche Sitzträgerschiene (62) umfasst, wobei die weitere feststehende Sitzträgerschiene (60) mit einer weiteren Fahrzeugsitzstütze verbunden ist, wobei die Arretierungsvorrichtung (36) und die wietere Arretierungsvorrichtung (44) zwischen der Fahrzeugsitzstütze und der weiteren Fahrzeugsitzstütze angeordnet sind.

5. Fahrzeugsitzsystem (1') nach Anspruch 3, wobei die Sitzträgerschienenanordnung eine weitere Sitzträgerschienenanordnung umfasst, die eine weitere feststehende Sitzträgerschiene (60') und eine wietere bewegliche Sitzträgerschiene (62') umfasst, wobei die weitere feststehende Sitzträgerschiene (60') mit einer weiteren Fahrzeugsitzstütze verbunden ist, wobei die Arretierungsvorrichtung (36') und die weitere Arretierungsvorrichtung (44') zwischen der Sitzträgeranordnung und der weiteren Sitzträgeranordnung angeordnet sind.

6. Fahrzeugsitzsystem (1) nach Anspruch 1, wobei die Arretierungsvorrichtung (36) zwischen dem Sitzträger (14) und der beweglichen Sitzträgerschiene (54) angeordnet ist.

7. Fahrzeugsitzsystem (1) nach Anspruch 6, ferner umfassend:
eine weitere Arretierungsvorrichtung (44), wobei die weitere Arretierungsvorrichtung (44) mit dem Sitzträger (14) und dem Freigabe-/Arretierungsmechanismus (49') verbunden ist, wobei durch eine Betätigung des Freigabe-/Arretierungsmechanismus (49') gleichzeitig die Arretierungsvorrichtung (36) und die weitere Arretierungsvorrichtung (44) betätigt werden.

8. Fahrzeugsitzsystem (1) nach Anspruch 7, wobei die Sitzträgerschienenanordnung eine weitere Sitzträgerschienenanordnung umfasst, die eine weitere feststehende Sitzträgerschiene (60) und eine weitere bewegliche Sitzträgerschiene (62) umfasst, wobei die weitere feststehende Sitzträgerschiene (60) mit einer weiteren Fahrzeugsitzstütze verbunden ist, wobei die weitere Arretierungsvorrichtung (44) zwischen dem Sitzträger (14) und der weiteren beweglichen Sitzträgerschiene (62) angeordnet ist.

9. Fahrzeugsitzsystem (1) nach Anspruch 7, wobei die Sitzträgerschienenanordnung eine weitere Sitzträgerschienenanordnung umfasst, die eine weitere feststehende Sitzträgerschiene (60) und eine weitere bewegliche Sitzträgerschiene (62) umfasst, wobei die weitere feststehende Sitzträgerschiene (60) mit einer weiteren Fahrzeugsitzstütze verbunden ist, wobei die weitere Arretierungsvorrichtung (44) an dem Sitzträger (14) und der weiteren beweglichen Sitzträgerschiene (62) befestigt ist.

10. Fahrzeugsitzsystem (1, 1') nach Anspruch 1, wobei der Freigabe-/Arretierungsmechanismus (49') die Arretierungsvorrichtung (36, 36') zwischen einem arretierten Zustand und einem freigegebenen Zustand betätigt, wobei der Sitzträger (14, 14') und die Rückenlehne (12, 12') in dem freigegebenen Zustand beweglich sind, wobei der Sitzträger (14, 14') und die Rückenlehne (12, 12') in dem arretierten Zustand in einer feststehenden Position sind.

11. Fahrzeugsitzsystem (1, 1') nach Anspruch 1, wobei die feststehende Sitzträgerschiene (52, 52') und die bewegliche Sitzträgerschiene (54, 54') bezüglich der Fahrzeugsitzstütze horizontal montiert sind.

12. Fahrzeugsitzsystem (1, 1') nach Anspruch 1, wobei die Sitzträgerschienenanordnung einen beweglichen Sitzträgerschienenverbinder (43', 55') umfasst, wobei der bewegliche Sitzträgerschienenverbinder direkt mit dem Sitzträger (14, 14') und der beweglichen Sitzträgerschiene (54, 54') verbunden ist.

13. Fahrzeugsitzsystem (1, 1') nach Anspruch 1, wobei der Freigabe-/Arretierungsmechanismus (49') Kunststoffbuchsen (196, 198), einen Akuator (148) und eine Antriebsstange (200) umfasst, wobei die Kunststoffbuchsen (196, 198) mit der Antriebsstange (200) verbunden ist.

14. Fahrzeugsitzsystem (1, 1') nach Anspruch 13, wobei der Freigabe-/Arretierungsmechanismus (49') ein Seil (152) umfasst, wobei das Seil (152) mit der Arretierungsvorrichtung (36, 36'), der Antriebsstange (200) und dem Aktuator (148) verbunden ist.

15. Fahrzeugsitzsystem (1, 1') nach Anspruch 13, ferner umfassend:
eine weitere Arretierungsvorrichtung (44, 44'), wobei der Freigabemechanismus (49') ein weiteres Seil (168) umfasst, wobei das weitere Seil (168) mit der weiteren Arretierungsvorrichtung (44, 44') verbunden ist, wobei durch Betätigung des Aktuators (148) gleichzeitig das Seil (152) und das weitere Seil (168) über die Antriebsstange (200) betätigt werden, so dass die Arretierungsvorrichtung (36, 36') und die weitere Arretierungsvorrichtung (44, 44') aus einem eines arretierten Zustands und eines freigegebenen Zustands in einen anderen des arretierten Zustands und des freigegebenen Zustands betätigt werden.

## Revendications

1. Système de siège de véhicule (1, 1') comprenant :
un siège de véhicule (10, 10') comprenant une base de siège (14, 14'), un dossier (12, 12'), un agencement de glissières de base de siège, un agencement de glissières de dossier comprenant une glissière fixe de dossier (32, 32') et une glissière mobile de dossier (30, 30') qui est mobile le long de la glissière fixe de dossier (32, 32'), un bras de liaison (16, 16'), un raccord pivotant de base de siège entre ledit bras de liaison (16, 16') et ladite base de siège (14, 14') et un raccord pivotant bras de liaison-dossier (28, 28'), ledit agencement de glissières de base de siège comprenant une glissière fixe de base de siège (52, 52') et une glissière mobile de base de siège (54, 54') qui est mobile le long de la glissière fixe de base de siège (52, 52'), ladite glissière fixe de base de siège (52, 52') étant raccordée à un support de siège de véhicule et ladite glissière mobile de base de siège (54, 54') étant raccordée à ladite base de siège (14, 14'), ladite glissière fixe de dossier (32, 32') étant raccordée à un support de dossier de véhicule (22, 22') ;
un dispositif de verrouillage (36, 36') raccordé audit siège de véhicule (10, 10') ;
un mécanisme de déverrouillage/verrouillage (49') raccordé audit dispositif de verrouillage (36, 36') pour déverrouiller et verrouiller ledit dispositif de verrouillage (36, 36'),
**caractérisé en ce que**
le raccord pivotant bras de liaison-dossier (28, 28') est placé entre ledit bras de liaison (16, 16') et ledit dossier (12, 12') et ladite glissière mobile de dossier (30, 30') ;
le dossier (12, 12') et la base de siège (14, 14') sont supportés sur une structure de support (20, 20'), et
le dispositif de verrouillage (36, 36') est raccordé à un support de dispositif de verrouillage (38, 38') par le biais d'un raccord de support de dispositif de verrouillage (40, 40'), le support de dispositif de verrouillage (38, 38') étant raccordé à la structure de support (20, 20').

2. Système de siège de véhicule (1, 1') selon la revendication 1, dans lequel ledit dispositif de verrouillage (36, 36') est raccordé à ladite base de siège (14, 14').

3. Système de siège de véhicule (1, 1') selon la revendication 2, comprenant en outre :
un autre dispositif de verrouillage (44, 44'), ledit autre dispositif de verrouillage (44, 44') étant raccordé à ladite base de siège (14, 14') et audit mécanisme de déverrouillage/verrouillage (49'), un actionnement dudit mécanisme de déverrouillage/verrouillage (49') actionnant simultanément ledit dispositif de verrouillage (36, 36') et ledit autre dispositif de verrouillage (44, 44').

4. Système de siège de véhicule (1) selon la revendication 3, dans lequel ledit agencement de glissières de base de siège comprend un autre agencement de glissières de base de siège comprenant une autre glissière fixe de base de siège (60) et une autre glissière mobile de base de siège (62), ladite autre glissière fixe de base de siège (60) étant raccordée à un autre support de siège de véhicule, ledit dispositif de verrouillage (36) et ledit autre dispositif de verrouillage (44) étant placés entre ledit support de siège de véhicule et ledit autre support de siège de véhicule.

5. Système de siège de véhicule (1') selon la revendication 3, dans lequel ledit agencement de glissières de base de siège comprend un autre agencement de glissières de base de siège comprenant une autre glissière fixe de base de siège (60') et une autre glissière mobile de base de siège (62'), ladite autre glissière fixe de base de siège (60') étant raccordée à un autre support de siège de véhicule, ledit dispositif de verrouillage (36') et ledit autre dispositif de verrouillage (44') étant placés entre ledit agencement de glissières de siège et ledit autre agencement de glissières de siège.

6. Système de siège de véhicule (1) selon la revendication 1, dans lequel ledit dispositif de verrouillage (36) est placé entre ladite base de siège (14) et ladite glissière mobile de base de siège (54).

7. Système de siège de véhicule (1) selon la revendication 6, comprenant en outre :
un autre dispositif de verrouillage (44), ledit autre dispositif de verrouillage (44) étant raccordé à ladite base de siège (14) et audit mécanisme de déverrouillage/verrouillage (49'), un actionnement dudit mécanisme de déverrouillage/verrouillage (49') actionnant simultanément ledit dispositif de verrouillage (36) et ledit autre dispositif de verrouillage (44).

8. Système de siège de véhicule (1) selon la revendication 7, dans lequel ledit agencement de glissières de base de siège comprend un autre agencement de glissières de base de siège comprenant une autre glissière fixe de base de siège (60) et une autre glissière mobile de base de siège (62), ladite autre glissière fixe de base de siège (60) étant raccordée à un autre support de siège de véhicule, ledit autre dispositif de verrouillage (44) étant placé entre ladite base de siège (14) et ladite autre glissière mobile de base de siège (62).

9. Système de siège de véhicule (1) selon la revendication 7, dans lequel ledit agencement de glissières de base de siège comprend un autre agencement de glissières de base de siège comprenant une autre glissière fixe de base de siège (60) et une autre glissière mobile de base de siège (62), ladite autre glissière fixe de base de siège (60) étant raccordée à un autre support de siège de véhicule, ledit autre dispositif de verrouillage (44) étant fixé à ladite base de siège (14) et à ladite autre glissière mobile de base de siège (62).

10. Système de siège de véhicule (1, 1') selon la revendication 1, dans lequel ledit mécanisme de déverrouillage/verrouillage (49') actionne ledit dispositif de verrouillage (36, 36') entre un état verrouillé et un état déverrouillé, ladite base de siège (14, 14') et ledit dossier (12, 12') étant mobiles dans ledit état déverrouillé, ladite base de siège (14, 14') et ledit dossier (12, 12') étant dans une position fixe dans ledit état verrouillé.

11. Système de siège de véhicule (1, 1') selon la revendication 1, dans lequel ladite glissière fixe de base de siège (52, 52') et ladite glissière mobile de base de siège (54, 54') sont montées horizontalement par rapport audit support de siège de véhicule.

12. Système de siège de véhicule (1, 1') selon la revendication 1, dans lequel ledit agencement de glissières de base de siège comprend un élément de raccordement de glissière mobile de base de siège (43', 55'), ledit élément de raccordement de glissière mobile de base de siège étant directement raccordé à ladite base de siège (14, 14') et à ladite glissière mobile de base de siège (54, 54').

13. Système de siège de véhicule (1, 1') selon la revendication 1, dans lequel ledit mécanisme de déverrouillage/verrouillage (49') comprend des bagues en plastique (196, 198), un actionneur (148) et une tige d'entraînement (200), lesdites bagues en plastique (196, 198) étant raccordées à ladite tige d'entraînement (200) .

14. Système de siège de véhicule (1, 1') selon la revendication 13, dans lequel ledit mécanisme de déverrouillage/verrouillage (49') comprend un câble (152), ledit câble (152) étant raccordé audit dispositif de verrouillage (36, 36'), à ladite tige d'entraînement (200) et audit actionneur (148).

15. Système de siège de véhicule (1, 1') selon la revendication 13, comprenant en outre :
un autre dispositif de verrouillage (44, 44'), ledit mécanisme de déverrouillage (49') comprenant un autre câble (168), ledit autre câble (168) étant raccordé audit autre dispositif de verrouillage (44, 44'), un actionnement dudit actionneur (148) actionnant simultanément ledit câble (152) et ledit autre câble (168) par le biais de ladite tige d'entraînement (200) de telle sorte que ledit dispositif de verrouillage (36, 36') et ledit autre dispositif de verrouillage (44, 44') soient actionnés de l'un d'un état verrouillé et d'un état déverrouillé à un autre dudit état verrouillé et dudit état déverrouillé.
